# EUROPÄISCHE PATENTANMELDUNG

(11) **EP 4 382 232 A1**
(43) Veröffentlichungstag der Anmeldung: **12.06.2024**
(21) Anmeldenummer: 22211930.7
(22) Anmeldetag: 07.12.2022
(51) Int. Cl.: B23C 5/00, B23C 5/06, B23C 5/20, B23C 5/28

(54) **FRÄSWERKZEUG**

(71) Anmelder: CERATIZIT Besigheim GmbH, 74354 Besigheim (DE)
(72) Erfinder: SCHNEIDER, Rico, 74354 Besigheim (DE)
(74) Vertreter: Ciesla, Dirk

(57) **Zusammenfassung**

Fräswerkzeug (1), das eine Stirnseite (2), mehrere Schneidelemente (3) und einen monolithischen Trägerbereich (4) hat, wobei jedes der Schneidelemente (3) an dem Trägerbereich (4) befestigt und zum stirnseitigen Schneiden angeordnet und ausgebildet ist, wobei in den Trägerbereich (4) mehrere Spannuten (6) eingelassen sind, die jeweils stirnseitig durch einen Eintrittspalt (7) gegenüber jeweils einem der Schneidelemente (3) geöffnet und jeweils stirnseitig durch einen den Trägerbereich (4) monolithisch fortsetzenden Stirnwandungsabschnitt (8) gedeckelt sind.

## Beschreibung

Die vorliegende Erfindung betrifft ein Fräswerkzeug.

Bei dem in der DE 10 2016 116 466 A1 gezeigten Schneidwerkzeug ist ein Spanleitdeckel an einem Schneidkopf lösbar gehalten.

Der in der DE 10 2016 116 466 A1 gezeigte Spanleitdeckel soll verhindern, dass bereits abgetragene Späne auf ein zu bearbeitendes Werkstück fallen, bildet aber Montagespalte gegenüber dem Schneidkopf, führt zu einer Querkraftbelastung der ihn haltenden Schraube und ist darüber hinaus ein zusätzlich zu montierendes Bauteil. In den Montagespalten klemmen Späne sich sehr leicht fest und schädigen so verklemmt ein zu bearbeitendes Werkstück. Die haltende Schraube wird bei zu hohen Drehzahlen des Spanleitdeckels durch die dabei auftretenden Fliehkräfte übermäßig quer belastet und so geschädigt. Indem es sich bei dem Spanleitdeckel um ein zusätzliches Bauteil handelt, dauert die Montage des Schneidwerkzeugs insgesamt länger und wird dadurch teurer und wartungsintensiver.

Die Aufgabe der vorliegenden Erfindung besteht darin, ein Fräswerkzeug bereitzustellen, das abgetragene Späne zuverlässiger darin behindert, auf ein zu bearbeitendes Werkstück zu fallen, und zugleich besser gegen Spanverklemmungen gesichert, bei höheren Drehzahlen antreibbar und kostengünstiger herstellbar ist.

Die technische Aufgabe der vorliegenden Erfindung wird gelöst durch den Gegenstand von Anspruch 1. Vorteilhafte Weiterbildungen der Erfindung sind den abhängigen Ansprüchen zu entnehmen, die untereinander frei kombinierbar sind.

Das Fräswerkzeug hat eine Stirnseite, mehrere Schneidelemente und einen monolithischen Trägerbereich, wobei jedes der Schneidelemente an dem Trägerbereich befestigt und zum stirnseitigen Schneiden angeordnet und ausgebildet ist, wobei in den Trägerbereich mehrere Spannuten eingelassen sind, die jeweils stirnseitig durch einen Eintrittspalt gegenüber jeweils einem der Schneidelemente geöffnet und jeweils stirnseitig durch einen den Trägerbereich monolithisch fortsetzenden Stirnwandungsabschnitt gedeckelt sind.

Indem der Trägerbereich monolithisch ist, wird er materialnahtlos und formschlossfrei strukturell zusammengehalten, zum Beispiel wie im Falle eines Materialblocks, in dem die Spannuten eingefräst und/oder eingebohrt sind. In einer korrekten technischen Zeichnung ist dem Trägerbereich daher in einem beliebigen Querschnitt eine einheitliche Schraffur zugeordnet.

Mit "monolithisch fortsetzend" ist gemeint, dass die Stirnwandungsabschnitte materialnahtlos und formschlussfrei an dem Trägerbereich ausgebildet sind. In einer korrekten technischen Zeichnung haben der Stirnwandungsabschnitt und der Trägerbereich in einem beliebigen Querschnitt dieselbe Schraffur.

Die Stirnwandungsabschnitte sind dadurch gebildet, dass die Spannuten den Trägerbereich stirnseitig hinterschneiden.

Die Eintrittsspalte sind dadurch gebildet, dass die Spannuten den Trägerbereich stirnseitig durchbrechen.

Die Spannuten nehmen die durch die Schneidelemente beim stirnseitigen Schneiden erzeugten Späne auf. Die Stirnwandungsabschnitte behindern diese Späne daran, aus den Spannuten stirnseitig auszutreten, insbesondere dann, wenn das Fräswerkzeug einen tiefgelegenen Bodenbereich planfräst, wo einmal ausgetretene Späne nur schwer entfernt werden können, und auch, wenn das Zerspanungswerkzeug rotatorisch stillsteht, also kein fliehkraftunterstützter Späneabtransport in den Spannuten mehr möglich ist.

Indem jedes der Schneidelemente an dem Trägerbereich befestigt und zum stirnseitigen Schneiden angeordnet und ausgebildet ist, ragen die Schneidelemente jeweils abschnittsweise aus der Stirnseite hervor, um so beim Fräsen stirnseitig schneidaktiv zu sein.

Das Fräswerkzeug erstreckt sich entlang von einer Drehachse und ist, weil es ein Fräswerkzeug ist, zum Zerspanen bezüglich einer Vorschubrichtung quer zur Drehachse und zum gleichzeitigen Zerspanen bezüglich einer weiteren Vorschubrichtung parallel zur Drehachse ausgebildet.

Gemäß einer vorteilhaften Weiterbildung ist mindestens eine der Spannuten quer zu dem sie öffnenden Eintrittsspalt weiter gedeckelt ist als dieser Eintrittsspalt breit ist. Die entsprechende Breite des Eintrittsspaltes in stirnseitig zwischen zwei Spaltkanten an derselben Spannut bemessen, wobei die eine Spaltkante durch eine Stirnschneidkante von einem der Schneidelemente und die andere Spaltkante durch eine Stirnkante von einem der Stirnwandungsabschnitte gebildet ist.

Indem mindestens eine der Spannuten durch einen der Stirnwandungsabschnitte stirnseitig weiter gedeckelt ist als der Eintrittsspalt breit, ist der Trägerbereich durch diese Spannut stirnseitig besonders weit hinterschnitten, wodurch die von der Spannut aufgenommenen Späne besonders stark daran behindert werden, stirnseitig aus der Spannut auszutreten. Vorzugsweise ist jede der Spannuten durch einen der Stirnwandungsabschnitte stirnseitig weiter gedeckelt als der sie öffnende Eintrittsspalt breit ist.

Gemäß einer vorteilhaften Weiterbildung ist mindestens einer der Stirnwandungsabschnitte aufseiten der von ihm gedeckelten Spannut angefast. Indem der Stirnwandungsabschnitt so angefast ist, werden die durch das entsprechende Schneidelement erzeugten Späne in die Spannut geführt hineingeleitet. Vorzugsweise ist jeder der Stirnwandungsabschnitte aufseiten der von ihm gedeckelten Spannut angefast.

Gemäß einer vorteilhaften Weiterbildung ist der angefaste Stirnwandungsabschnitt unter einem Innenfasenwinkel im Bereich von 10° bis 75° angefast. Der Bereich von 10° bis 75° ist bezüglich einer hinreichenden Wandstärke des Stirnwandungsabschnitts und einer gleichzeitigen Beibehaltung der durch die Anfasung bereitgestellten vorteilhaften Spanleitung optimal.

Gemäß einer vorteilhaften Weiterbildung ist der Trägerbereich durch zumindest eine der Spannuten stirnseitig konkav hinterschnitten. Die Spannut kann so durch Fräsen und/oder Bohren hergestellt werden, wobei sich zugleich die Spanleitung des entsprechenden Stirnwandungsabschnitts verbessert. Vorzugsweise ist der Trägerbereich durch jede der Spannuten stirnseitig konkav hinterschnitten.

Gemäß einer vorteilhaften Weiterbildung hat der Trägerbereich mindestens einen durch den Trägerbereich stirnseitig monolithisch geschlossenen und im Bereich einer der Spannuten mündenden Kühlmittelkanal. Der Kühlmittelkanal ist also zum Beispiel durch eine Bohrung in dem Trägerbereich herstellbar und sorgt in einem durchfluteten Zustand für eine Kühlmittelflutung der Spanraumvertiefung, in deren Bereich er mündet. Vorzugsweise hat der Trägerbereich mehrere durch den Trägerbereich stirnseitig monolithisch geschlossene und im Bereich jeweils einer der Spannuten mündende Kühlmittelkanäle.

Gemäß einer vorteilhaften Weiterbildung ist mindestens eines der Schneidelemente zur Kühlmittelreflexion nach axial hinten schräg angestellt ist. Wenn also das Kühlmittel aus dem Kühlmittelkanal auf das Schneidelement trifft, wird das Kühlmittel von der Stirnseite weg in die entsprechende Spannut reflektiert, wodurch eine Sogwirkung entsteht, die die Späne in die Spannut einsaugt.

Das mindestens eine der Schneidelemente ist zur Kühlmittelreflexion nach axial hinten schräg angestellt, indem dieses Schneidelement unter einem Kühlmittelreflektionswinkel aufseiten der im zugeordneten Spannut angestellt ist, der in Blickrichtung senkrecht zu einer Drehachse des Fräswerkzeugs durch einen Winkelschenkel, der parallel zur Drehachse angeordnet ist, und einen Winkelschenkel, der der axialen Erstreckung dieses Schneidelements aufseiten der Spannut folgt, aufgespannt ist, wobei der der axialen Erstreckung dieses Schneidelements folgende Winkelschenkel dem anderen Winkelschenkel in einem drehangetriebenen Zustand des Fräswerkzeugs voraneilt. Vorzugsweise liegt der Kühlmittelreflektionswinkel im Bereich von 10° bis 25°, weil dies für die Sogwirkung optimal ist, indem ein relativ großer Unterdruck in der diesem Schneidelement zugeordneten Spannut aufgebaut wird.

Der der axialen Erstreckung dieses Schneidelements folgende Winkelschenkel des Kühlmittelreflektionswinkels kann dieser axialen Erstreckung des Schneidelements auch dadurch folgen, dass dieser Winkelschenkel der axialen Erstreckung eines Plattensitzes folgt, in dem das Schneidelement befestigt ist.

Wenn das mindestens eine Schneidelement eine Umfangsschneide hat, folgt der der axialen Erstreckung dieses Schneidelements folgende Winkelschenkel des Kühlmittelreflektionswinkels dieser Umfangsschneide in Blickrichtung senkrecht zur Drehachse.

Vorzugsweise ist jedes Schneidelement zur Kühlmittelreflexion nach axial hinten schräg angestellt ist.

Gemäß einer vorteilhaften Weiterbildung ist mindestens eine der Spannuten gegenüberliegend von der Stirnseite ungedeckelt endend. In einem drehangetriebenen Zustand werden die Späne aus dieser so gedeckelten herausgeschleudert, so dass dadurch eine Spänestau vermieden wird. Vorzugsweise ist jede der Spannuten gegenüberliegend von der Stirnseite ungedeckelt endend. Außerdem wird die Sogwirkung vergrößert, wenn das mindestens eine Schneidelement zur Kühlmittelreflexion nach axial hinten schräg angestellt und dieser so ungedeckelten Spannut zugeordnet ist.

Gemäß einer vorteilhaften Weiterbildung ist mindestens eine der Spannuten zumindest umfangsseitig ungedeckelt. Die so ungedeckelte Spannut nimmt umfangsseitig erzeugte Späne auf, lässt sich besonders einfach entleeren und auch durch Fräsen kostengünstig herstellen. "Umfangsseitig" meint, dass das Fräswerkzeug eine Umfangsseite hat, die das Fräswerkzeug umgibt, wie zum Beispiel eine Zylindermantelfläche einen Zylinderkörper umgebend ist. Vorzugsweise ist jede der Spannuten umfangsseitig ungedeckelt.

Gemäß einer vorteilhaften Weiterbildung ist mindestens eines der Schneidelemente durch ein Spannelement reversibel lösbar an dem Trägerbereich befestigt. Das so reversibel lösbar befestigte Schneidelemente kann besonders einfach ausgetauscht werden. Bei dem Spannelement kann es sich zum Beispiel um eine Schraube handeln, die in ein Gewinde des Trägerkörpers eingreift. Vorzugsweise ist jedes der Schneidelemente durch ein Spannelement reversibel lösbar an dem Trägerbereich befestigt.

Gemäß einer vorteilhaften Weiterbildung ist das Spannelement quer zu einer Längserstreckung des Fräswerkzeugs in den Trägerbereich eingesteckt. Dadurch wird das Schneidelement besonders stabil gegen Fliehkräfte an dem Trägerbereich gesichert befestigt. Vorzugsweise ist jedes Spannelement quer zu der Längserstreckung des Fräswerkzeugs in den Trägerbereich eingesteckt.

Gemäß einer vorteilhaften Weiterbildung hat mindestens eines der Schneidelemente einen Schneidenträger und einen von dem Schneidenträger stoffschlüssig getragenen Schneidenkörper. Dadurch wird das Schneidelement noch leichter austauschbar und präziser einstellbar. Der Schneidenkörper kann durch ein Hartmetall (*cemented carbide*) und der Schneidenträger aus einem diesbezüglich verschiedenen Material gebildet sein. Vorzugsweise hat jedes der Schneidelemente einen Schneidenträger und einen von dem Schneidenträger stoffschlüssig getragenen Schneidenkörper.

Gemäß einer vorteilhaften Weiterbildung ist mindestens eines der Schneidelemente zusätzlich zum umfänglichen Schneiden angeordnet und ausgebildet. Somit übernimmt diese Schneidelement zwei Schneidfunktionen, wodurch sich die für ein umfängliches Zerspanen benötige Anzahl von Schneidelemente reduziert. Vorzugsweise ist jedes der Schneidelement zusätzlich zum umfänglichen Schneiden angeordnet und ausgebildet.

Gemäß einer vorteilhaften Weiterbildung hat das Fräswerkzeug mindestens fünf der Schneidelemente und mindestens fünf der Spannuten, wobei jedes der Schneidelemente jeweils zusätzlich zum umfänglichen Schneiden angeordnet und ausgebildet ist. Dadurch erhöht sich das Zerspanvolumen so weit, dass das Planfräsen von Motorblöcken besonders wirtschaftlich wird.

Gemäß einer vorteilhaften Weiterbildung hat der Trägerbereich mehrere Stege, wobei in jedem Steg ein Plattensitz ausgebildet ist, wobei jeder der Stirnwandungsabschnitte in Umfangsrichtung gegenüberliegend von jedem der Plattensitze einen der Stege monolithisch fortsetzend ist. In einem schneidaktiv gedrehten Zustand des Zerspanungswerkzeugs ist damit bezüglich jedem Steg der Plattensitz voreilend und der ihn monolithisch fortsetzende Stirnwandungsabschnitt nacheilend. Indem jeder der Stirnwandungsabschnitte in Umfangsrichtung gegenüberliegend von jedem der Plattensitze einen der Stege monolithisch fortsetzend ist, bilden sich keine Montagespalte zwischen den Plattensitzen und den Stirnwandungsabschnitten am jeweils selben Steg, also anders als bei einem Spanleitdeckel, der, um eine Beschädigung der Schneidelemente zu vermeiden, unter einem jeweils radial sich erstreckenden Montagespalte gegenüber jedem der Schneidelemente aufgesetzt werden muss und ist.

Weitere Vorteile und Zweckmäßigkeiten der Erfindung ergeben sich anhand der nachfolgenden Beschreibung von einem Ausführungsbeispiel unter Bezugnahme auf die beigefügten Figuren.

### Von den Figuren zeigen

- Fig. 1:: ein Fräswerkzeug in einer perspektivischen Darstellung;
- Fig. 2:: das Fräswerkzeug in Blickrichtung auf die Stirnseite;
- Fig. 3:: ein vergrößertes Detail des Fräswerkzeugs;
- Fig. 4:: ein vergrößertes weiteres Detail des Fräswerkzeugs;
- Fig. 5:: einen Querschnitt des Fräswerkzeugs gemäß der Schnittlinie A-A in Fig. 2;
- Fig. 6:: einen Querschnitt des Fräswerkzeug gemäß der Schnittlinie B-B in Fig.2;
- Fig. 7:: das Fräswerkzeug in einer weiteren perspektivischen Darstellung mit demontiertem Kühlmittelleitdeckel;
- Fig. 8:: eine vergrößerte Darstellung eines Plattensitzes des Fräswerkzeugs;
- Fig. 9:: eine vergrößerte weitere Darstellung eines Plattensitzes des Fräswerkzeugs.

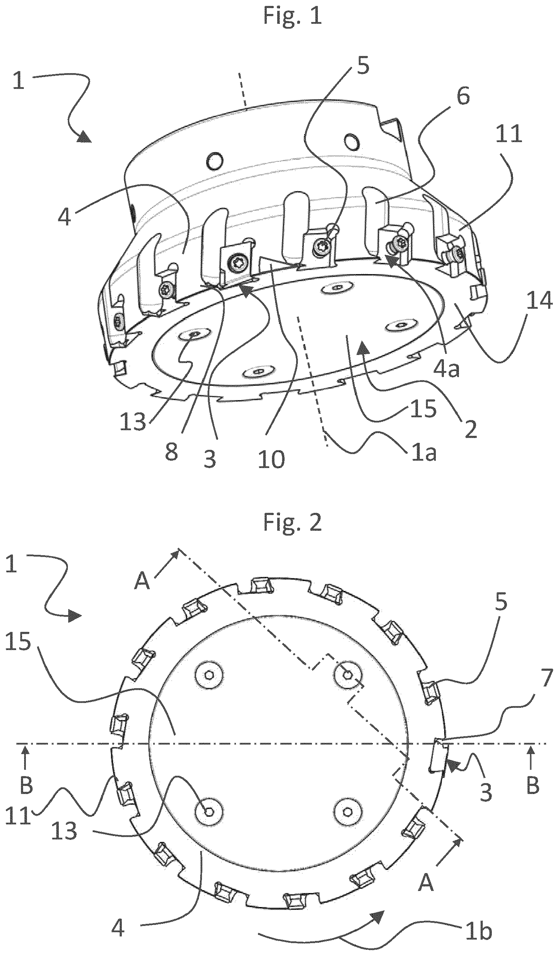

Fig. 1 bis Fig. 9 zeigen ein Fräswerkzeug 1, das bezüglich einer Drehachse 1a in eine Drehrichtung 1b schneidaktiv zum Planfräsen unter einer Vorschubbewegung senkrecht zur Drehachse 1a drehantreibbar ausgebildet ist.

Das Fräswerkzeug 1 hat eine Stirnseite 2, mehrere Schneidelemente 3 und einen monolithischen Trägerbereich 4. Der Trägerbereich 4 ist subtraktiv durch Fräsen aus einem Stahlblock hergestellt.

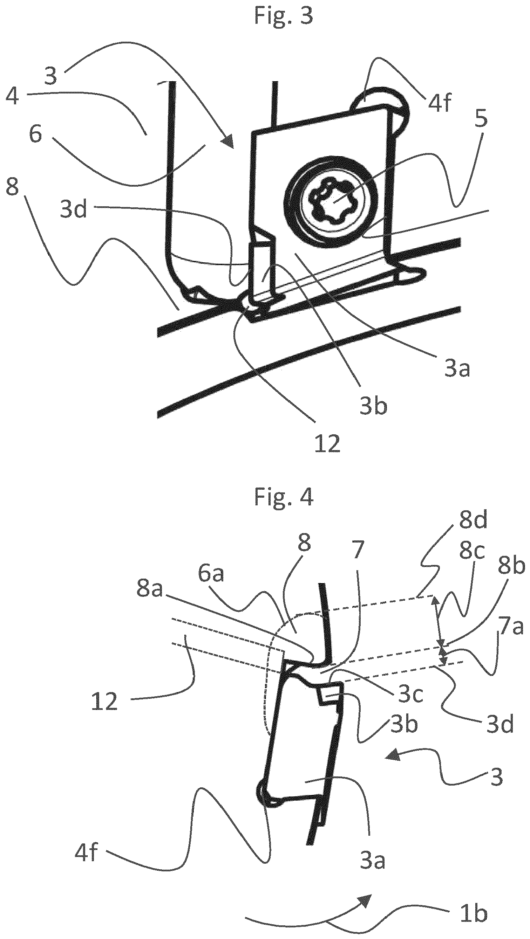

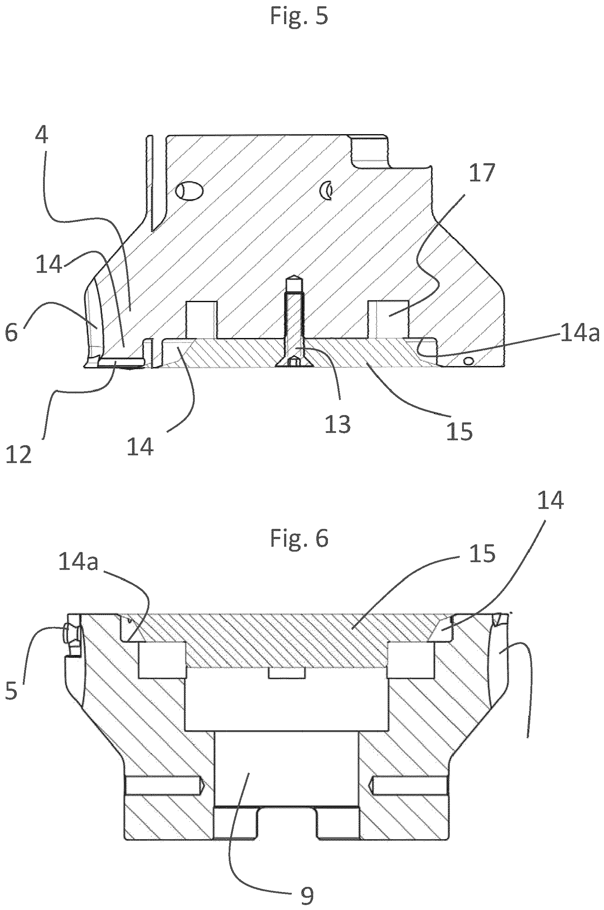

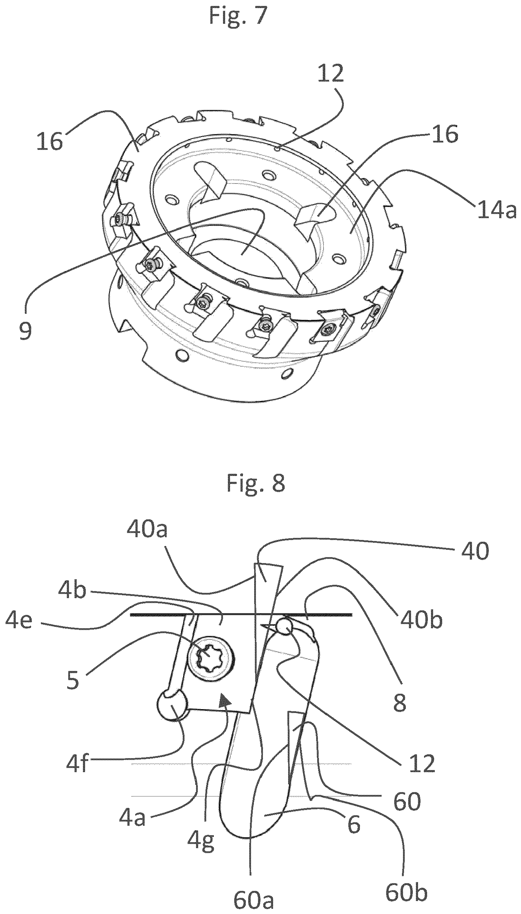

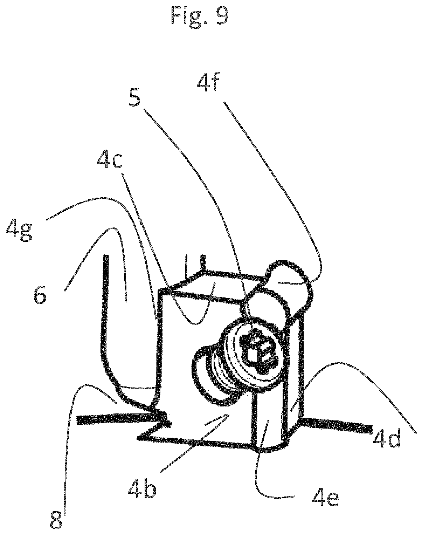

Fig. 1 zeigt das Fräswerkzeug 1 in einer perspektivischen Ansicht und Fig. 2 in Blickrichtung parallel zur Drehachse 1a sowie auf die Stirnseite 2. Fig. 3 zeigt ein vergrößertes Detail des Fräswerkzeugs 1 im Bereich eines der Schneidelemente 3 gemäß der perspektivischen Darstellung in Fig. 1. Fig. 4 zeigt in einer teilweise transparenten Darstellung ein vergrößertes Detail des Fräswerkzeugs 1 im Bereich eines der Schneidelemente 3 gemäß der Stirnseitenansicht in Fig. 2. Fig. 5 zeigt einen Querschnitt durch den Trägerbereich 4 gemäß der Schnittlinie A-A in Fig. 2 und Fig. 6 einen Querschnitt durch den Trägerbereich 4 gemäß der Schnittlinie B-B in Fig. 2. Fig. 7 zeigt das Fräswerkzeug 1 in einer perspektivischen Darstellung mit einem demontierten Kühlmittelleitdeckel 15. Fig. 8 zeigt einen Plattensitz 4a des Fräswerkzeugs 1 im Detail. Fig. 9 zeigt den Plattensitz im Detail gemäß einer weiteren Darstellung.

In Fig. 1 und Fig. 2 ist besonders gut ersichtlich, dass der Trägerbereich 4 mehrere Plattensitze 4a hat, in denen jeweils eines der Schneidelemente 3 durch jeweils eine Spannschraube 5 reversibel lösbar befestigt ist; aus Gründen der Übersichtlichkeit wird nur eines der Schneidelemente 3 konkret gezeigt, offenbart ist aber, dass in jedem der Plattensitze 4a eines der Schneidelemente 3 befestigt ist. Die Spannschrauben 5 sind jeweils radial bezüglich der Drehachse 1a in den Trägerbereich 4 eingeschraubt.

Jeder der Plattensitze 4a hat, wie Fig. 9 im Detail zeigt, eine bezüglich der Drehrichtung 1b tangentiale Anlagefläche 4b, eine stirnseitige Anlagefläche 4c, eine bezüglich der Drehrichtung radiale Anlagefläche 4d, eine verrundete Kante 4e zwischen den Anlageflächen 4b und 4d sowie eine verrundete Kante 4f zwischen den Anlagefläche 4c und 4d. Die tangentialen Anlageflächen 4b sind in die Drehrichtung 1b jeweils durch eine Plattensitzübergangskante 4g begrenzt.

Die in Fig. 2 gezeigte Anzahl der Plattensitze 4a und damit die gleich große Anzahl der Schneidelemente 3je nach einem vorgegebenen Flugkreisdurchmesser geändert werden, soll jedoch vorzugsweise mindestens fünf betragen, weil dies eine fürs Planfräsen von üblichen Motorblöcken geeignete Mindestanzahl ist.

Fig. 3 und Fig. 4 zeigen besonders deutlich, dass die Schneidelemente 3 jeweils einen Schneidenträger 3a und einen an dem Schneidträger 3a jeweils stoffschlüssig befestigten Schneidenkörper 3b aus einem Hartmetall (*cemented carbide*) haben. Jeder der Schneidenträger 3a kontaktiert jeweils flächenmäßig die Anlageflächen 4b, 4c und 4d seines Plattensitzes 4a. Der Schneidenkörper 3b hat eine Stirnschneidkante 3c, die über die Stirnseite 2 hinausragt, und eine Umfangsschneidkante 3d, die über den Trägerbereich 4 bezüglich der Drehachse 1a radial hinausragt. Die Schneidelemente 3 sind also jeweils zum stirnseitigen und umfangsseitigen Schneiden ausgebildet und angeordnet.

In Fig. 1 ist ersichtlich, dass in den Trägerbereich 4 mehrere längsförmige Spannuten 6 eingefräst sind, also eingelassen sind. Die Spannuten 6 durchbrechen stirnseitig abschnittsweise die Stirnseite 2 unter Bildung von jeweils einem stirnseitigen Eintrittspalt 7 gegenüber jeweils einem der Schneidelemente 3, wie insbesondere Fig. 4 in ihrer teiltransparenten Darstellung zeigt. Aus Gründen der Übersichtlichkeit ist in den Figuren nur jeweils eine dieser Spannuten mit dem Bezugszeichen 6 versehen.

Fig. 4 zeigt aufgrund der teiltransparenten Darstellung und für jede Spannut 6 exemplarisch, dass die Spannuten 6 den Trägerbereich 4 stirnseitig abschnittsweise hinterschneiden, so dass mehrere Stirnwandungsabschnitte 8 gebildet werden, die den Trägerbereich 4 jeweils monolithisch fortsetzen und so jeweils eine der Spannuten 6 stirnseitig abschnittsweise deckeln, so dass von den Spannuten 6 aufgenommene Späne an einem stirnseitigen Austritt aus den Eintrittsspalten 7 behindert werden. Jeder der Stirnwandungsabschnitte 8 hat stirnseitig eine Stirn kante 8a.

In Fig. 4 ist in Blickrichtung parallel zu Drehachse 1a sowie auf die Stirnseite der maximal äußere und durch eines der Schneidelemente 3 stirnseitig nicht verdeckte Umfang 6a einer der Spannuten 6 eingezeichnet. Bei nicht-transparenter Darstellung wäre der äußere Umfang 6a in der Stirnseitenansicht gemäß Fig. 4 nicht zu erkennen.

Anhand des Verlaufs des äußeren Umfangs 6a ist ersichtlich, dass die Spannuten 6 jeweils den Trägerbereich 4 der Drehrichtung 1b folgend gegenüberliegend von der Stirnschneidkante 3c und zusätzlich in radialer Richtung nach innen hinterschneiden, also bei einer Zusammenschau mit dem in Fig. 1 vergrößert dargestellten Plattensitz 4a radial hinter die Anlagefläche 4b hinterschneiden.

Folglich deckelt der Stirnwandungsabschnitt 8 die Spannut 6 bezüglich der Drehrichtung 1b abschnittsweise gegenüberliegend von dem Schneidelement 3 und bezüglich der Drehrichtung 1b abschnittsweise bezüglich der Drehrichtung 1b radial nach innen ab, so dass die Spannut 6 auch in radialer Richtung hinter dem Plattensitz 4a gedeckelt ist.

In Fig. 4 ist ferner für alle Eintrittsspalte 7 exemplarisch ersichtlich, dass der Eintrittsspalt 7 stirnseitig jeweils durch die Beabstandung von der Stirnschneidkante 3c und der Stirnkante 8a gebildet ist. Eine stirnseitige Spaltbreite 7a ist bei Betrachtung der Stirnseite 2 als Abstand zwischen einer linearen Extrapolationslinie 30d der Stirnschneidkante 3c und einer dazu parallelverschobenen und dabei unter einer solchen Verschiebung als erstes die Stirnkante 8a kontaktierenden Bemessungslinie 8b bemessen, wobei die Spaltbereite 7a der senkrecht zur Extrapolationslinie 30d bemessene Abstand zwischen der Extrapolationslinie 30d und der Bemessungslinie 8b ist.

Dem Stirnwandungsabschnitt 8 ist jeweils analog zu der Bemessung der Spaltbreite 7a eine bezüglich der Drehrichtung 1b bemessene Umfangstiefe 8c ausgehend von der Stirnkante 8a zugeordnet. Die Umfangstiefe 8c ist bei Betrachtung der Stirnseite 2 als Abstand zwischen der Bemessungslinie 8b und einer dazu parallelverschobenen und dabei den äußeren Umfang 6a als letztes kontaktierenden weiteren Bemessungslinie 8d bemessen, wobei die Umfangstiefe 8c der senkrecht zur Bemessungslinie 8b bemessene Abstand zwischen der Bemessungslinie 8b und der weiteren Bemessungslinie 8d ist.

In Fig. 4 ist für jede der Spannuten 6 exemplarisch ersichtlich, dass sie quer zu dem Eintrittsspalt 7 weiter durch den Stirnwandungsabschnitt 8 gedeckelt ist als der Eintrittsspalt 7 breit ist, indem die Umfangstiefe 8c größer ist als die Spaltbreite 7a.

Fig. 1 zeigt, dass jeder der Stirnwandungsabschnitte 8 in Blickrichtung senkrecht zur Drehachse 1a unter einem Innenfasenwinkel 10 angefast ist. Der Innenfasenwinkel 10 liegt im Bereich von 10° bis 75°. Jeder der Stirnwandungsabschnitte 8 ist in Blickrichtung senkrecht zur Drehachse 1a ferner aufseiten der von ihm gedeckelten Spannut 6 außerhalb von dort, wo er unter dem Innenfasenwinkel 10 angefast ist, also in die Drehrichtung 1b weiter beabstandet von dem jeweiligen Eintrittsspalt 7, konkav verrundet.

Fig. 1 zeigt ferner, dass gegenüberliegend von der Stirnseite 2 jede der Spannuten 6 zum freien Spanaustritt ungedeckelt und bezüglich ihres in Fig. 4 besonders deutlich gezeigten Eintrittsspaltes 7 nacheilend endend ausgeformt ist, wobei sich "nacheilend" darauf bezieht, dass das Fräswerkzeug 1 in die Drehrichtung 1b gedreht wird, so dass jede der Spannuten 6 fliehkraftunterstützt die durch sie aufgenommenen Späne von der Stirnseite 2 wegtransportiert.

Fig. 1 zeigt ferner, dass der Trägerbereich 4 eine der Anzahl der Plattensitze 4 entsprechende Anzahl von Stegen 11 hat, die jeweils durch eine der Spannuten 6 und einen der Plattensitze 4 gebildet sind; aus Gründen der Übersichtlichkeit ist nur einer der Stege mit dem Bezugszeichen 11 versehen.

In jedem Stege 11 ist also einer der Plattensitze 4 ausgebildet und in Umfangsrichtung gegenüberliegend ist einer der Stirnwandungsabschnitte 8 den Steg 11 monolithisch fortsetzend. Bei der Betrachtung der Stirnseite 2 sind die Stege 11 in die Drehrichtung 1b alternierend abwechselnd mit den Spannuten 6 angeordnet.

In jeder der Spannuten 6 mündet jeweils ein Kühlmittelkanal 12 direkt unterhalb des jeweiligen Stirnwandungsabschnitts 8, wie Fig. 3 und Fig. 8 jeweils besonders deutlich zeigen. Der Kühlmittelkanal 12 erstreckt sich in dem Trägerbereich 4 senkrecht zur Drehachse 1a, so dass jeweils ein Kühlmittelstrahl auf jeweils eines der Schneidelemente 3 auftrifft und aufgrund der gegenüber der Drehachse 1a schrägen Anstellung der Plattensitze 4a axial nach hinten von der Stirnseite 2a weg reflektiert wird, so dass in den jeweiligen Eintrittsspalt 7 eintretende Späne axial nach hinten von der Stirnseite weggesogen werden. Die entsprechende Sogwirkung wird dadurch erhöht, dass die Spannuten 6 gegenüberliegend von der Stirnseite ungedeckelt enden.

Die Schneidelemente 3 sind jeweils schräg angestellt, indem sie sich unter dem in Fig. 8 gezeigten Kühlmittelreflektionswinkel 40 aufseiten der ihnen zugeordneten Spannut 6 erstrecken, wobei der Kühlmittelreflektionswinkel 40 in Blickrichtung senkrecht zur Drehachse 1a bemessen ist und durch einen zur Drehachse 1a parallelen Winkelschenkel 40a und einen der axialen Erstreckung de Schneidelements 3 aufseiten der Spannut 6 folgenden Winkelschenkel 40b aufgespannt ist und so bemessen im Bereich von 10° bis 25° liegt, wobei der Winkelschenkel 40b gegenüber dem Winkelschenkel 40a unter einer Drehung in die Drehrichtung 1b voreilend angeordnet ist. In Fig. 8 beträgt der Kühlmittelreflektionswinkel 40 exemplarisch 14°.

Indem der Kühlmittelreflektionswinkel 40 im Bereich von 10° bis 25° liegt, wird eine für die beschriebene Sogwirkung optimale Reflektion des aus dem jeweiligen Kühlmittelkanals 12 austretenden Kühlmittels an den Schneidelementen 3 erreicht.

Der Winkelschenkel 40b folgt in Blickrichtung senkrecht zur Drehachse 1a jeweils einer der Umfangsschneiden 3d und zusätzlich auch der axialen Erstreckung des Plattensitzes 4a.

Die Spannnuten 6 erstrecken sich jeweils unter einem analog zum Kühlmittelreflektionswinkel 40 und betragsmäßig gleich groß bemessenen Spannutwinkel 60, wonach der Spannutwinkel 60 durch einen zur Drehachse 1a parallelen Winkelschenkel 60a und einen der jeweiligen Haupterstreckung der Spannuten 6 jeweils folgenden Winkelschenkel 60b aufgespannt ist, wobei der Winkelschenkel 60b gegenüber dem Winkelschenkel 60a unter einer Drehung in die Drehrichtung 1b voreilend angeordnet ist.

Fig. 5, 6 und 7 zeigen in ihrer Zusammenschau, wie das Kühlmittel in die Kühlmittelkanäle 12 geleitet wird. So hat der Trägerbereich 4 einen zentralen Kühlmittelhauptkanal 9, eine tellerförmige sowie von dem Kühlmittelhauptkanal zentral unterbrochene Ausnehmung 14, vier Quernuten 16 und eine Ringwandung 16. Die Kühlmittelkanäle 12 sind in der Ringwandung 16 ausgebildet und werden durch die Ringwandung 16 stirnseitig monolithisch gedeckelt. Der Kühlmittelleitdeckel 15 ist an einem Boden 14a der Ausnehmung 14 durch Deckelschrauben 13 reversibel lösbar befestigt und liegt außerhalb der Quernuten 16 abdichtend auf dem Boden 14a, so dass das Kühlmittel von dem Kühlmittelhauptkanal 9 nur durch die Quernuten 16 in die Ausnehmung 14 strömen kann. Der Kühlmittelleitdeckel 15 ist aufseiten des Kühlmittelhauptkanals 9 zweistufig angefast, so dass der Kühlmittelleitdeckel 15 bezüglich der Drehachse 1a radial zu der Ringwandung 14 beabstandet ist, so dass das Kühlmittel nach dem Austritt aus den Quernuten 16 an dem Kühlmittelleitdeckel 15 geleitet in die Kühlmittelkanäle 12 eintreten kann. Der Kühlmittelleitdeckel 15 dichtet zusätzlich die Ausnehmung 14 stirnseitig ab.

Fig. 1 bis Fig. 9 zeigen das Fräswerkzeug 1, bei dem die Spannuten 8 jeweils aufgrund der Stirnwandungsabschnitte 8 stirnseitig gedeckelt und durch jeweils einen Eintrittsspalt 7 gegenüber jeweils einem der Schneidelemente 3 stirnseitig geöffnet sind, so dass die bei stirnseitigen Zerspanen erzeugten Späne direkt von den Schneidelementen 3 in die Spannuten 6 gelangen, an einem Austritt aber durch die Stirnwandungsabschnitte 8 behindert werden. Der durch das Fräswerkzeug 1 beim Planfräsen hinterlassene Bereich wird dadurch von Spänen besser freigehalten und stirnseitige Spanverklemmung werden besser vermieden, weil die Stirnwandungsabschnitte 8 den Trägerbereich 4 jeweils monolithisch fortsetzen.

Das Fräswerkzeug 1 stellt beim Planfräsen eine Sogwirkung bereit, wodurch der beim Planfräsen hinterlassene Bereich noch besser von Spänen besser freigehalten wird. Die Sogwirkung entsteht durch die Reflektion des Kühlmittels an den Schneidelementen 3, indem die Schneidelemente 3 unter dem Kühlmittelreflektionswinkel 40 schräg angestellt sind.

Das Fräswerkezug 1 ist nicht auf die in den Fig. 1 bis Fig. 9 gezeigte Ausführungsform beschränkt, so können die Schneidelemente 3 auch stoffschlüssig an dem Trägerbereich 4 befestigt sind und/oder es zusätzliche Schneidelemente vorgesehen werden, die nur umfangsseitig schneiden.

## Patentansprüche

1. Fräswerkzeug (1), das eine Stirnseite (2), mehrere Schneidelemente (3) und einen monolithischen Trägerbereich (4) hat, wobei jedes der Schneidelemente (3) an dem Trägerbereich (4) befestigt und zum stirnseitigen Schneiden angeordnet und ausgebildet ist, wobei in den Trägerbereich (4) mehrere Spannuten (6) eingelassen sind, die jeweils stirnseitig durch einen Eintrittspalt (7) gegenüber jeweils einem der Schneidelemente (3) geöffnet und jeweils stirnseitig durch einen den Trägerbereich (4) monolithisch fortsetzenden Stirnwandungsabschnitt (8) gedeckelt sind.

2. Fräswerkzeug (1) nach Anspruch 1, wobei mindestens eine der Spannuten (6) quer zu dem sie öffnenden Eintrittsspalt (7) weiter gedeckelt ist als dieser Eintrittsspalt (7) breit ist.

3. Fräswerkzeug (1) nach einem der vorhergehenden Ansprüche, wobei mindestens einer der Stirnwandungsabschnitte (8) aufseiten der von ihm gedeckelten Spannut (6) angefast ist.

4. Fräswerkzeug (1) nach Anspruch 3, wobei der angefaste Stirnwandungsabschnitt (8) unter einem Innenfasenwinkel (10) im Bereich von 10° bis 75° angefast ist.

5. Fräswerkzeug (1) nach einem der vorhergehenden Ansprüche, wobei der Trägerbereich (4) durch zumindest eine der Spannuten (6) stirnseitig konkav hinterschnitten ist.

6. Fräswerkzeug (1) nach einem der vorhergehenden Ansprüche, wobei der Trägerbereich (4) mindestens einen durch den Trägerbereich (4) stirnseitig monolithisch geschlossenen und im Bereich einer der Spannuten (6) mündenden Kühlmittelkanal (12) hat.

7. Fräswerkzeug (1) nach einem der vorhergehenden Ansprüche, wobei mindestens eines der Schneidelemente (3) zur Kühlmittelreflexion nach axial hinten schräg angestellt ist.

8. Fräswerkzeug (1) nach einem der vorhergehenden Ansprüche, wobei mindestens eine der Spannuten (6) gegenüberliegend von der Stirnseite (2) ungedeckelt endend ist.

9. Fräswerkzeug (1) nach einem der vorhergehenden Ansprüche, wobei mindestens eine der Spannuten (6) zumindest umfangsseitig ungedeckelt ist.

10. Fräswerkzeug (1) nach einem der vorhergehenden Ansprüche, wobei mindestens eines der Schneidelemente (3) durch ein Spannelement (5) reversibel lösbar an dem Trägerbereich (4) befestigt ist.

11. Fräswerkzeug (1) nach Anspruch 10, wobei das Spannelement (5) quer zu einer Längserstreckung des Fräswerkzeugs (1) in den Trägerbereich (4) eingesteckt ist.

12. Fräswerkzeug (1) nach einem der vorhergehenden Ansprüche, wobei mindestens eines der Schneidelemente (3) einen Schneidenträger (3a) und einen von dem Schneidenträger (3a) stoffschlüssig getragenen Schneidenkörper (3b) hat.

13. Fräswerkzeug (1) nach einem der vorhergehenden Ansprüche, wobei mindestens eines der Schneidelemente (3) zusätzlich zum umfänglichen Schneiden angeordnet und ausgebildet ist.

14. Fräswerkzeug (1) nach einem der vorhergehenden Ansprüche, wobei das Fräswerkzeug (1) mindestens fünf der Schneidelemente (3) und mindestens fünf der Spannuten (6) hat, wobei jedes der Schneidelemente (3) jeweils zusätzlich zum umfänglichen Schneiden angeordnet und ausgebildet ist.

15. Fräswerkzeug (1) nach einem der vorhergehenden Ansprüche, wobei der Trägerbereich (4) mehrere Stege (11) hat, wobei in jedem Steg (11) ein Plattensitz (4a) ausgebildet ist, wobei jeder der Stirnwandungsabschnitte (8) in Umfangsrichtung gegenüberliegend von jedem der Plattensitze (4a) einen der Stege (11) monolithisch fortsetzend ist.
